# EUROPÄISCHE PATENTANMELDUNG

(11) **EP 4 220 918 A1**
(43) Veröffentlichungstag der Anmeldung: **02.08.2023**
(21) Anmeldenummer: 22154134.5
(22) Anmeldetag: 31.01.2022
(51) Int. Cl.: H02M 1/00, H02M 7/483

(54) **STROMRICHTER UND VERFAHREN ZUM BETREIBEN DES STROMRICHTERS**

(71) Anmelder: Siemens Energy Global GmbH & Co. KG, 81739 München (DE)
(72) Erfinder: Dallmer-Zerbe, Kilian, 91088 Bubenreuth (DE); Roman Marcos, Diego Alberto, 91052 Erlangen (DE); Alvarez Valenzuela, Rodrigo Alonso, 90408 Nürnberg (DE)

(57) **Zusammenfassung**

Die Erfindung betrifft ein Verfahren zum Betreiben eines Stromrichters (1) mit wenigstens einer Reihenschaltung von Schaltmodulen (SM), die jeweils Halbleiterschalter einen Energiespeicher aufweisen, gelöst, bei dem eine Schaltfrequenz der Schaltmodule mittels einer toleranzbasierten Modulation geregelt wird, und ein Absolutbetrag eines durch die Reihenschaltung fließenden Armstromes bei der Bildung eines Schaltintegralwertes der toleranzbasierten Modulation berücksichtigt wird. Die Erfindung betrifft ferner einen Stromrichter mit einer Regelungseinrichtung (2), die zum Durchführen des Verfahrens eingerichtet ist.

## Beschreibung

Die Erfindung betrifft ein Verfahren zum Betreiben eines Stromrichters mit wenigstens einer Reihenschaltung von Schaltmodulen, die jeweils Halbleiterschalter und einen Energiespeicher aufweisen.

Ein solches Verfahren ist beispielsweise aus der EP 3 713 073 A1 bekannt. Bei dem bekannten Verfahren wird im Betrieb des Stromrichters ein Schaltfrequenzregler eingesetzt, um die Schaltfrequenz und damit die Schaltverluste je Arbeitspunkt einzuregeln. Dazu werden Abweichungen zwischen aktuell gestellter Spannung und Sollspannung berechnet und unter Bildung eines Schaltintegralwertes in der Zeit integriert. Beim über- bzw. unterschreiten eines Integralgrenzwertes wird eine Schalthandlung ausgelöst. Insbesondere wird bei einem Überschreiten des oberen Integralgrenzwertes wenigstens ein abgeschaltetes Schaltmodul zugeschaltet beziehungsweise im Fall von bipolar schaltbaren Schaltmodulen (wie Vollbrückenschaltmodule) ein negativ eingeschaltetes Schaltmodul abgeschaltet (gesperrt) wird. Bei einem Unterschreiten des unteren Integralgrenzwertes wird hingegen wenigstens ein zugeschaltetes Schaltmodul abgeschaltet (im Fall von Vollbrückenschaltmodulen kann ein Schaltmodul mit negativer Polarität zugeschaltet werden). Die beiden Integralgrenzwerte bzw. deren Differenz definieren damit einen zulässigen Spannungsabweichungsbereich. Je größer der Spannungsabweichungsbereich ist, desto niedriger ist die resultierende (mittlere) Schaltfrequenz. Eine Reduktion des Integralgrenzwertes resultiert dabei in einer Erhöhung der Schaltfrequenz, entsprechend resultiert eine Erhöhung des Integralgrenzwertes in einer Reduktion der Schaltfrequenz. Das bekannte Verfahren wird üblicherweise als toleranzbasierte Modulation ("Tolerance Based Modulation", TBM) bezeichnet.

Es ist bekannt, dass beim Betrieb von Stromrichtern Verluste anfallen, die vor allem von Durchlassverlusten und den erwähnten Schaltverlusten der verwendeten Schaltmodule abhängen. In Anwendungen in Übertragungsnetz führen diese Verluste zu einer Erhöhung der Betriebskosten. Zugleich ist eine optimale Betriebsleistung bezüglich der Harmonischen und der Verzerrung gefordert, so dass beim Betrieb des Stromrichters eine Abwägung zwischen der Total Harmonic Distortion und den Verlusten getroffen werden muss. Die bereits genannten Schaltverluste lassen sich nicht beliebig reduzieren, ohne eine Spannungs-Unsymmetrie zwischen den Schaltmodulen eines Stromrichterarmes zu erhöhen. Eine niedrige Schaltfrequenz führt insbesondere dazu, dass einzelne Schaltmodule unter Umständen länger im Strompfad verbleiben, wobei die Unsymmetrie steigt. Diese Unsymmetrie führt im Fehlerfall zu einer potentiell geringeren Energieaufnahmefähigkeit der Schaltmodule (bevor deren Schutzgrenzen erreicht werden). Bei der Auslegung führt das meist zu einer (bezüglich Herstellungs- und Betriebskosten) nachteiligen Erhöhung der Anzahl der verbauten Schaltmodule. Zudem kann die Unsymmetrie unter Umständen zu einer Lebenszeitverkürzung der Schaltmodule und damit des gesamten Stromrichters führen.

Die Aufgabe der Erfindung ist es, ein artgemäßes Verfahren anzugeben, das einen möglichst zuverlässigen Betrieb des Stromrichters ermöglicht.

Die Aufgabe wird erfindungsgemäß durch ein Verfahren zum Betreiben eines Stromrichters mit wenigstens einer Reihenschaltung von Schaltmodulen, die jeweils Halbleiterschalter einen Energiespeicher aufweisen, gelöst, bei dem eine Schaltfrequenz der Schaltmodule mittels einer toleranzbasierten Modulation geregelt wird, und ein Absolutbetrag eines durch die Reihenschaltung fließenden Armstromes bei der Bildung eines Schaltintegralwertes der toleranzbasierten Modulation berücksichtigt wird. Die Reihenschaltung der Schaltmodule kann geeigneterweise zwischen einem Gleichspannungspol und einem Wechselspannungsanschluss des Stromrichters geschaltet sein und damit einen Stromrichterarm bilden.

Zur Bildung des Schaltintegralwertes wird zweckmäßigerweise eine Spannungsabweichung als Differenz zwischen einem Spannungssollwert und einem ermittelten Spannungsistwert berechnet. Der Spannungsistwert ist geeigneterweise eine Summe der gemessenen Energiespeicherspannungen der Schaltmodule, das heißt, der am jeweiligen Energiespeicher der Schaltmodule anstehenden Spannungen aller zugeschalteten Schaltmodule (im betreffenden Stromrichterarm oder -zweig). Die Spannungsabweichung wird dann in der Zeit integriert (geeigneterweise im Sinne einer Summe über vorgegebene, einander nachfolgende sampling-Zeitpunkte), unter Bildung des Schaltintegralwertes. Es ist hierbei zu beachten, dass der Spannungsfehlerwert bzw. die Spannungsabweichung und damit auch der Schaltintegralwert sowohl positive als auch negative Werte annehmen kann. Der obere Integralgrenzwert definiert den maximalen zulässigen Wert des Schaltintegralwertes, der untere Integralgrenzwert definiert den minimalen zulässigen Wert des Schaltintegralwertes. Zulässig bedeutet in diesem Zusammenhang, dass bei Überschreitung des oberen Integralgrenzwertes durch den (momentanen) Schaltintegralwert wenigstens ein abgeschaltetes Schaltmodul zugeschaltet beziehungsweise im Fall von bipolar schaltbaren Schaltmodulen (wie Vollbrückenschaltmodule) ein negativ eingeschaltetes Schaltmodul abgeschaltet (gesperrt) wird. Bei Unterschreitung des unteren Integralgrenzwertes wird hingegen wenigstens ein zugeschaltetes Schaltmodul abgeschaltet (oder, im Fall von Vollbrückenschaltmodulen, ein Schaltmodul negativ zugeschaltet). Die beiden Integralgrenzwerte bzw. deren Differenz definieren damit einen zulässigen Spannungsabweichungsbereich. Je größer der Spannungsabweichungsbereich ist, desto niedriger ist die resultierende (mittlere) Schaltfrequenz (da bsp. der Schaltintegralwert erst nach mehr Sampling-Zeitpunkten den Integralgrenzwert überschreitet).

Durch die Berücksichtigung des Armstromes bei der Berechnung des Schaltintegralwertes wird im Bereich, in dem die Energieaufnahme/Abgabe bzw. der Armstrom hoch ist, das Fehlerintegral entsprechend schneller in Richtung der Integralgrenze zu bewegen. Die lokale Schaltfrequenz wird auf diese Weise entsprechend erhöht. Über einen Schaltfrequenzregler kann sichergestellt werden, dass die Gesamtschaltfrequenz den gewünschten Wert nicht überschreitet. Vorteilhafterweise ist mit dem erfindungsgemäßen Verfahren eine effizientere Balancierung der Spannungen der Schaltmodule (ein Vermeiden von Spannungs-Unsymmetrie) ermöglicht. Durch die effiziente Balancierung können gar die Gesamtschaltfrequenz und damit auch die Schaltverluste im Stromrichter reduziert werden.

Mittels einer lokalen (innerhalb einer gegebenen Zeitspanne innerhalb einer Netzperiode lediglich einige der Schaltmodule betreffende) Erhöhung der Schaltfrequenz kann eine Spannungs-Unsymmetrie insbesondere auch dann reduziert werden, wenn diese Erhöhung bei einem hohen energetischem Eintrag, vor kritischen Punkten für die Auslegung (Arm-Spannungsspitze etc.) oder während eines energetisch begrenzten Bereichs erzeugt wird, wenn der Armstrom Gleichanteile aufweist und damit entweder Entladen oder Laden von Submodulen innerhalb einer Netzperiode häufiger auftritt.

Das Berücksichtigen des Armstromes kann auf eine einfache Weise realisiert werden, indem das Bilden des Schaltintegralwertes ein Multiplizieren der Spannungsabweichung mit einem armstromabhängigen Verstärkungsfaktor umfasst. Der Verstärkungsfaktor kann dabei derart gewählt werden, dass er mit einem höheren Armstrom steigt. Insbesondere kann der armstromabhängige Verstärkungsfaktor eine lineare bzw. affine Funktion des Absolutbetrages des Armstromes sein. Zum Beispiel kann ein Verstärkungsfaktor F gemäß der Formel F(Ia) = a * |Ia| + 1 definiert werden, wobei Ia der Armstrom und a ein geeignet zu wählender Parameter sind. Aus a > 0 folgt, dass stets F > 1 gilt.

Als eine weitere Maßnahme zur Reduktion der Kosten und Erhöhung der Zuverlässigkeit des Stromrichterbetriebs kann eine Mindesteinschaltzeit für wenigstens ein Schaltmodul reduziert werden. Um den sicheren Betrieb von Umrichtern zu gewährleisten ist eine positive Dämpfung gegenüber Störungen notwendig. Normalerweise gibt es relevante Resonanzen in Netzen in den Bereich von 1kHz bis 5kHz. Diese Resonanzen sind charakteristisch für die jeweilige Konfiguration des AC Netzes, d.h. die konkrete Verschaltung von Teilnetzen ein Verbundnetz. Durch unvermeidbare Totzeiten in der Messung und/oder Regelung und/oder Modulation wird oft eine negative Dämpfung (=Verstärkung) im Bereich 2kHz-4kHz erzeugt. Durch die Anforderung an die Regelung, möglichst schnell auf Fehler zu reagieren, also mit einer möglichst hohen Regelungsverstärkung zu arbeiten, ist es nicht möglich die Verstärkung der Regelung zu reduzieren, um mehr Dämpfung im System zu erreichen. Bisher wurde versucht, ein Trade-off zwischen FRT Performance und Dämpfung in der Regelung zu finden. Alternativ müssen entsprechende Hardware-Filter gebaut werden, um genügend Dämpfung im System zu erreichen. Eine weitere mögliche Lösung ist ein Verbot von bestimmten Konfigurationen des AC-Netzes. Allerdings weisen alle diese Lösungen den Nachteil auf, dass der Einsatzbereich der Lösung eingeschränkt oder verteuert ist. Die Mindesteinschaltzeit ist diejenige Zeit, die ein einzelnes Modul den Zustand nicht ändern kann, wodurch eine maximale Schaltfrequenz pro Modul impliziert ist. Sie ist insbesondere durch die thermische Auslegung des Schaltmoduls, die benötigte Zeit zur Ausräumung der Ladungsträger im betreffenden Halbleiter sowie die benötigte Zeit zur Wiederherstellung der Schaltfähigkeit des Schaltmoduls bedingt. Dank der vorgeschlagenen Reduktion der Mindesteinschaltzeit entsteht eine neuer Freiheitgrad. Der Wert der Mindesteinschaltzeit kann so gewählt werden, dass die äquivalente Filterwirkung die gewählte Resonanzfrequenz stark dämpft. Die Reduktion der Mindesteinschaltzeit erlaubt eine lokale (auf die betreffenden Schaltmodule beschränkte) Erhöhung der Schaltfrequenz, wodurch eine bessere Dämpfung hochfrequenter Anteile der Störungen ermöglicht ist (weil die Regelung dort schneller reagieren kann). Die optimale Wert für den Mindesteinschaltzeit kann sich beispielsweise durch die Beziehung n/(Frequenz zu dämpfen) von n aus {1,2,3} ergeben. Eine weitere mögliche Implementierung des Konzepts wäre durch die Addition eines stark Frequenz-selektiven Notch-filters im Sollwert denkbar.

Es ist denkbar, in der Stromrichterregelung anstelle durch eine übergeordnete Instanz vorgegebener Sollwerte und/oder gemessener Istwerte solche zu verwenden, die der Stromrichter selbst mittels einer Vorhersagefunktion bestimmt. Auf diese Weise können Störungen und Fehler aufgrund der Totzeiten reduziert bzw. vermieden werden. Beispielsweise können zum Bilden des Schaltintegralwertes anstelle des Spannungssollwertes ein vorhergesagter Spannungssollwert und/oder anstelle des gemessenen Spannungsistwertes ein vorhergesagter Spannungsistwert verwendet werden (Entsprechendes gilt auch für Stromwerte). Demnach wartet die Stromrichterregelung nicht, bis sie die Sollwerte bzw. Istwerte empfängt, sondern ermittelt vorhergesagte Soll- bzw. Istwerte auf der Grundlage vergangener ("echter") Soll- bzw. Istwerte. Eine solche Regelung kann vorteilhaft eine Verzögerung im stationären Betrieb kompensieren. Zudem bleibt die Reaktion der Regelung bei transienten Vorgängen gleich schnell. Die vorhergesagten Soll- bzw. Istwerte können geeigneterweise mit den tatsächlichen Soll- bzw. Istwerten anschließend verglichen bzw. überprüft werden, um ein Auseinanderdriften der Vorhersage und dem tatsächlichen Netzzustand zu vermeiden bzw. einen transienten Zustand zu erkennen.

Die Erfindung betrifft ferner einen Stromrichter mit wenigstens einer Reihenschaltung von Schaltmodulen, die jeweils Halbleiterschalter und einen Energiespeicher aufweisen.

Ein solcher Stromrichter ist aus der bereits erwähnten EP 3 713 073 A1 bekannt. Der Stromrichter kann Stromrichterarme umfassen, die jeweils zwischen einem DC-Pol und einem AC-Anschluss oder auch zwischen zwei AC-Anschlüssen geschaltet sind. Die Reihenschaltung der Schaltmodule ist in einem der Stromrichterarme angeordnet. Der Stromrichter kann zum Umwandeln einer Gleichspannung in eine Wechselspannung (und umgekehrt) eingerichtet sein. Der Stromrichter kann aber auch zu einer Frequenzumwandlung oder auch zu einer Stabilisierung eines Wechselspannungsnetzes eingerichtet sein. Der Stromrichter umfasst üblicherweise eine Regelungseinrichtung. Mittels der Regelungseinrichtung kann eine Regelung von Regelungsparametern des Stromrichters durchgeführt werden. Regelungsparameter können beispielsweise eine Spannung, ein Strom oder eine Leistung sein. Insbesondere kann eine Armspannung geregelt werden, also die an einem der Stromrichterarme anstehende Spannung. Ein solcher Stromrichter wird oftmals als ein modularer Mehrstufenumrichter bezeichnet.

Die Aufgabe der Erfindung ist es, einen artgemäßen Stromrichter anzugeben, der möglichst kostengünstig und zuverlässig im Betrieb ist.

Die Aufgabe wird mit einem artgemäßen Stromrichter erfindungsgemäß durch eine Regelungseinrichtung gelöst, die zum Durchführen eines erfindungsgemäßen Verfahrens eingerichtet ist.

Die Vorteile des erfindungsgemäßen Stromrichters ergeben sich insbesondere aus den Vorteilen, die im Zusammenhang mit dem erfindungsgemäßen Verfahren bereits beschrieben wurden.

Vorzugsweise sind zumindest einige der Schaltmodule, bevorzugt alle Schaltmodule, Halbbrücken-Schaltmodule.

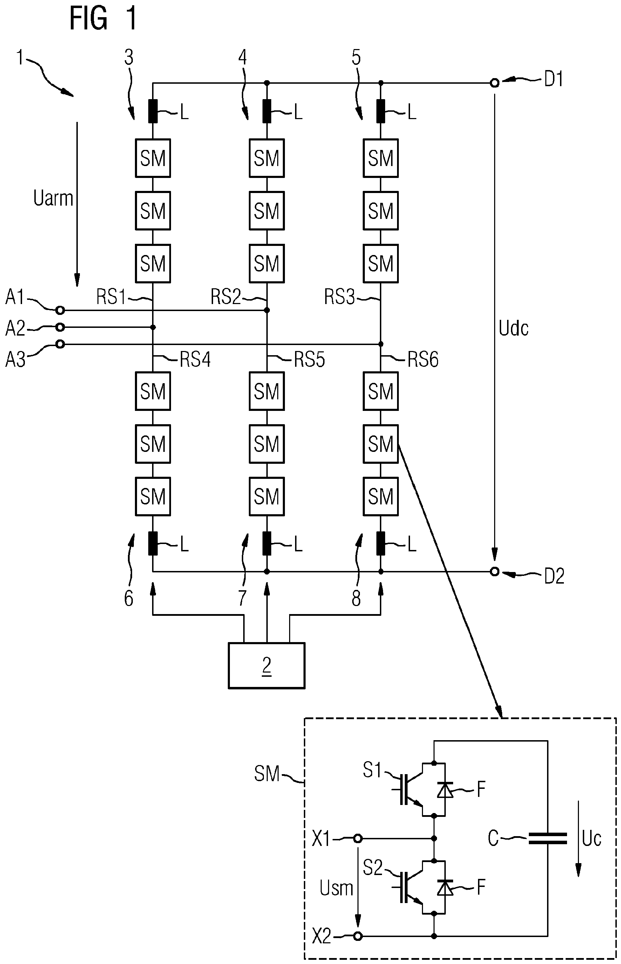

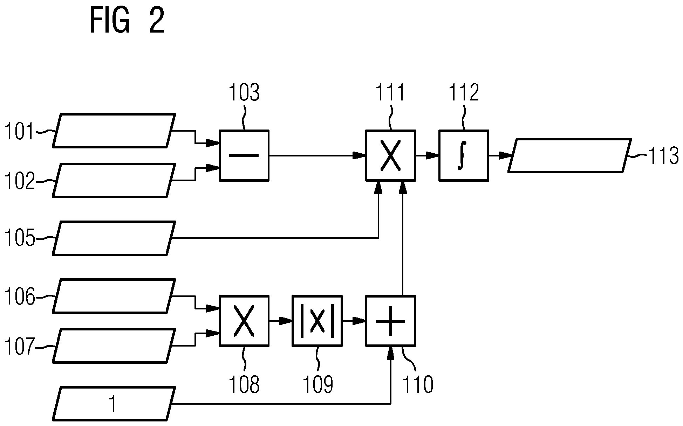

Die Erfindung wird nachfolgend Anhand der Figuren 1 und 2 weiter erläutert.
Figur 1 zeigt ein Ausführungsbeispiel eines erfindungsgemäßen Stromrichters in einer schematischen Darstellung;
Figur 2 zeigt ein Ausführungsbeispiel eines erfindungsgemäßen Verfahrens in einer schematischen Darstellung.

In Figur 1 ist ein Stromrichter 1 dargestellt, der oftmals als modularer Mehrstufenumrichter (MMC) bezeichnet wird. Der Stromrichter 1 umfasst sechs Stromrichterarme 3-8 mit Reihenschaltungen RS1-RS6, die jeweils eine Vielzahl von Schaltmodulen SM umfassen, sowie mit einer Induktivität L (Armdrossel). Der MMC ist im dargestellten Beispiel zur Umwandlung einer Wechselspannung eines Wechselspannungsnetzes, mit dem der MMC 1 beispielsweise mittels Anschlüsse A1-A3 sowie eines Netztransformators verbunden sein kann, in eine Gleichspannung UDC (oder umgekehrt) eingerichtet. Mittels der Anschlüsse D1, D2 kann der Stromrichter 1 mit einem Gleichspannungsnetz bzw. einer Gleichspannungsleitung verbunden werden. Der Stromrichter 1 umfasst ferner eine Regelungseinrichtung 2, die zur Stromrichterregelung eingerichtet ist. Dabei können Strom, Spannung, Leistung und Frequenz mittels der Regelungseinrichtung 2 geregelt werden. Zum Beispiel kann mittels der Regelungseinrichtung 2 kann eine Armspannung Uarm geregelt werden, wobei die Armspannung Uarm die an dem ersten Stromrichterarm 3 anstehende Spannung bezeichnet.

In dem in Figur 1 dargestellten Beispiel sind alle Schaltmodule SM gleichartig ausgebildet. Grundsätzlich ist es aber auch denkbar, dass unterschiedlich ausgebildete Schaltmodule in einem und demselben Stromrichter verwendet werden, beispielsweise Halbbrückenschaltmodule und Vollbrückenschaltmodule. Das Schaltmodul SM umfasst einen Kondensatorzweig, in dem ein erster Halbleiterschalter S1 mit einer antiparallelen Freilaufdiode F sowie in Reihe dazu ein Energiespeicher C angeordnet sind. In einem Brückenzweig zwischen zwei Anschlüssen X1, X2 des Schaltmoduls SM ist ein zweiter Halbleiterschalter S2 mit einer antiparallelen Freilaufdiode F angeordnet. Durch geeignete Ansteuerung der beiden Halbleiterschalter S1, S2 kann an den Anschlüssen X1, X2 eine Schaltmodulspannung Usm erzeugbar, die der Kondensatorspannung Uc oder aber einer Nullspannung entspricht.

In Figur 2 ist ein Ablaufdiagramm eines Teils der Stromrichterregelung dargestellt. In einem ersten Verfahrensschritt 101 wird ein Spannungssollwert Ua* für den betreffenden Stromrichterarm bereitgestellt. In einem zweiten Verfahrensschritt 102 wird ein (ermittelter bzw. gemessener) Spannungsistwert Ua für den betreffenden Stromrichterarm bereitgestellt. In einem dritten Verfahrensschritt 103 wird eine Spannungsabweichung DeltaU = Ua - Ua* gebildet. In einem vierten Verfahrensschritt wird die Spannungsabweichung an einen Multiplikator übermittelt. In einem fünften Verfahrensschritt 105 wird ein erster Parameter gainl bereitgestellt.

In einem sechsten Verfahrensschritt 106 wird ein in dem betreffenden Stromrichterarm fließender Armstrom Ia bereitgestellt. In einem siebten Verfahrensschritt 107 wird ein zweiter Parameter gain2 bereitgestellt. In einem achten Verfahrensschritt 108 wird der Armstrom Ia mit dem zweiten Paramater gain2 multipliziert. In einem neunten Verfahrensschritt 109 wird ein Absolutbetrag des Produktes gebildet. In einem zehnten Verfahrensschritt 110 wird zu dem Wert des Absolutbetrages unter Bildung eines armstromabhängigen Verstärkungsfaktors eine Eins hinzuaddiert.

In einem elften Verfahrensschritt 111 wird die Spannungsabweichung DeltaU mit dem ersten Parameter gainl sowie mit dem armstromabhängigen Verstärkungsfaktor multipliziert. In einem zwölften Verfahrensschritt 112 wird die Spannungsabweichung DeltaU unter Bildung eines Schaltintegralwertes integriert (die einzelnen, zeitlich nacheinander ermittelten Werte der Spannungsabweichung werden zueinander addiert). Sobald der Schaltintegralwert Is einen Integralgrenzwert überschreitet, wird in einem dreizehnten Verfahrensschritt 113 an einem der Schaltmodule des betreffenden Stromrichterarmes eine Schalthandlung ausgelöst.

## Patentansprüche

1. Verfahren zum Betreiben eines Stromrichters (1) mit wenigstens einer Reihenschaltung (RS1-RS6) von Schaltmodulen (SM), die jeweils Halbleiterschalter (S1, S2) und einen Energiespeicher (C) aufweisen, bei dem eine Schaltfrequenz der Schaltmodule (SM) mittels einer toleranzbasierten Modulation geregelt wird,
**dadurch gekennzeichnet, dass** ein Absolutbetrag eines durch die Reihenschaltung (RS1-RS6) fließenden Armstromes bei der Bildung eines Schaltintegralwertes der toleranzbasierten Modulation berücksichtigt wird.

2. Verfahren nach Anspruch 1, wobei das Bilden des Schaltintegralwertes ein Summieren einer Spannungsabweichung als Differenz zwischen einem Spannungssollwert und einem ermittelten Spannungsistwert zu nacheinander folgenden Zeitpunkten umfasst.

3. Verfahren nach Anspruch 2, wobei das Bilden des Schaltintegralwertes ein Multiplizieren der Spannungsabweichung mit einem armstromabhängigen Verstärkungsfaktor umfasst.

4. Verfahren nach Anspruch 3, wobei der armstromabhängige Verstärkungsfaktor eine lineare Funktion des Absolutbetrages des Armstromes ist.

5. Verfahren nach einem der vorangehenden Ansprüche, wobei eine Mindesteinschaltzeit für wenigstens ein Schaltmodul (SM) reduziert wird.

6. Verfahren nach einem der vorangehenden Ansprüche, wobei zum Bilden des Schaltintegralwertes anstelle des Spannungssollwertes ein vorhergesagter Spannungssollwert und/oder anstelle des Spannungsistwertes ein vorhergesagter Spannungsistwert verwendet wird.

7. Verfahren nach einem der vorangehenden Ansprüche, wobei mittels einer übergeordneten Schaltfrequenzregelung sichergestellt wird, dass eine Gesamtschaltfrequenz einen vorbestimmten Maximalwert nicht überschreitet.

8. Verfahren nach einem der vorangehenden Ansprüche, wobei beim Bilden des Schaltintegralwertes ferner Armspannungsspitzen berücksichtigt werden.

9. Stromrichter (1) mit wenigstens einer Reihenschaltung von Schaltmodulen (SM), die jeweils Halbleiterschalter (S1, S2) und einen Energiespeicher (C) aufweisen,
**gekennzeichnet durch**
eine Regelungseinrichtung (2), die zum Durchführen eines Verfahrens nach einem der vorangehenden Ansprüche eingerichtet ist.

10. Stromrichter nach Anspruch 9, wobei zumindest einige der Schaltmodule (SM) Halbbrücken-Schaltmodule sind.
